# EUROPÄISCHE PATENTSCHRIFT

(11) **EP 0 331 889 B1**
(45) Veröffentlichungstag und Bekanntmachung des Hinweises auf die Patenterteilung: **01.03.1995**
(21) Anmeldenummer: 89101184.3
(22) Anmeldetag: 24.01.1989
(51) Int. Cl.: B62D 7/14

(54) **Vierradlenkeinrichtung für Kraftfahrzeuge**
Four-wheel steering device for motor vehicles
Direction sur les quatre roues pour véhicules

(30) Priorität: 05.03.1988 DE 3807274
(43) Veröffentlichungstag der Anmeldung: 13.09.1989
(73) Patentinhaber: Dr.Ing.h.c. F. Porsche Aktiengesellschaft, 70435 Stuttgart (DE)
(72) Erfinder: Moll, Patrick, Dipl.-Ing., D-7250 Leonberg (DE)

(56) Entgegenhaltungen:
- EP-A- 0 096 345
- EP-A- 0 178 118
- EP-A- 0 263 414
- EP-A- 0 289 039
- DE-A- 3 525 255
- DE-A- 3 532 246
- FR-A- 1 096 872
- PATENT ABSTRACTS OF JAPAN, Band 8, Nr. 253 (M-339)[1690], 20. November 1984;& JP-A-59 128 054

## Beschreibung

Die Erfindung bezieht sich auf eine Vierrad-Lenkeinrichtung nach dem Oberbegriff des Anspruchs 1.

Aus der EP-A 0 096 345 ist eine Lenkeinrichtung für die Hinterräder eines Kraftfahrzeugs bei einem Vierradlenksystem bekannt, die einen hydraulischen Stellzylinder umfasst, der mit einem Radführungsglied verbunden ist und zum Einstellen von Hinterrad-Lenkwinkeln dient. Diese Radverstellungen erfolgen nach der DE-OS 31 24 821 in Abhängigkeit von Betriebsparametern des Fahrzeugs, die in einer elektronischen Steuereinheit bearbeitet und als ausgehende Steuersignale einem Regler bzw. einem Mehrwegeventil zum Ansteuern des Stellzylinders zugeführt werden.

Aus der DE-27 36 826 C2 ist eine Radaufhängung für Hinterräder eines Kraftfahrzeugs mit einem Schräglenker bekannt, der am Fahrzeugaufbau in Lagern angelenkt ist. Ferner ist aus der DE-35 32 246 A1, die dem Oberbegriff des Anspruchs 1 entspricht, eine Lenkeinrichtung für die Hinterräder sowie für die Vorderräder eines Kraftfahrzeuges bekannt, wobei eine elektronische Steuereinheit vorgesehen ist, die in Abhängigkeit von Fahrzustandsgrössen einen Radeinschlagwinkel zu den Vorderrädern ermittelt und diese über einen Stellzylinder ansteuerbar sind.

Der Erfindung liegt die Aufgabe zugrunde eine Lenkeinrichtung für ein Vierrad-Lenksystem nach der Gattung des Oberbegriff des Anspruchs 1 zu schaffen, die eine exakte Lenkwinkeleinstellung während der Fahrt und eine selbsttätige Rückstellung der Räder in eine Geradeausstellung bei einem Ausfall bzw. bei einem Defekt in der elektronischen und/oder hydraulischen Steuerung gewährleistet. Auch sollen die Lenkwinkel der Hinterräder unbeeinflußt von Bewegungen des Radführungslenkers, insbesondere von Federbewegungen bleiben. Ferner soll bei geringem Änderungsumfang die Lenkeinrichtung an einem Fahrzeug mit Schräglenkern nachrüstbar sein.

Diese Aufgabe wird erfindungsgemäß durch die kennzeichnenden Merkmale des Anspruchs 1 gelöst. Weitere vorteilhafte Merkmale beinhalten die Unteransprüche.

Die mit der Erfindung hauptsächlich erzielten Vorteile bestehen darin, daß eine Lenkeinrichtung für die Hinterräder eines Kraftfahrzeugs geschaffen wird, welche aus wenigen Bauteilen besteht und in einfacher Weise in ein Fahrzeug mit einer Schräglenkerhinterachse einbaubar ist. Es soll eine einfache Umrüstung eines Kraftfahrzeugs mit bekannter Schräglenkerachse zu einem Fahrzeug mit Allradlenkung möglich sein, wobei die kinematischen und elastokinematischen Eigenschaften beibehalten werden.

Es soll durch die besondere Lage des Ortes der Gelenkverbindung zwischen einer Spurstange und einem Lenkhebel in vorteilhafter Weise erreicht werden, daß bei Federbewegungen des Schräglenkers eine unbeabsichtigte Vorspurbeeinflussung der Hinterräder vermieden wird. Wenn eine gezielte Vorspuränderung des Hinterrades durch einen Radhub erzielt werden soll, kann dies in einfacher Weise durch eine veränderte Lage des Umlenkgelenkes z.B. neben der Schwenkachse zwischen der Spurstange und dem Lenkhebel sowie durch die Schrägstellung der Spurstange beeinflußt werden.

Der Steuerzylinder ist bewegungsabhängig mit einer mechanisch auf den Zylinder einwirkenden Rückstelleinrichtung gekoppelt, so daß bei einem Ausfall des elektrischen und/oder hydraulischen Steuersystems eine Wirkung auf den Steuerzylinder derart ausgeübt wird, daß die unter einem Lenkwinkel stehenden Hinterräder langsam gegen die Störkräfte im Radaufstandspunkt in eine Geradeausstellung zurückgeführt und in dieser Stellung spielfrei festgehalten werden und die gelenkte Hinterachse im drucklosen Zustand die Eigenschaften einer ungelenkten Hinterachse aufweist. Hierzu ist im hydraulischen Steuerkreis des Lenksystems ein Drosselventil vorgesehen über das das Druckmedium von der einen Kammer des Steuerzylinders in die andere Kammer fließen kann. In der Drosselstellung sind gleichzeitig auch die Abschaltventile geschlossen. Bei diesen Stellungen der Ventile ist der Steuerzylinder durch die Kraft der Rückstellfedern in seiner Mittelstellung festgesetzt.

Ein Ausführungsbeispiel der Erfindung ist in der Zeichnung dargestellt und wird im folgenden näher beschrieben.

Es zeigen:
- Fig. 1: eine Gesamtansicht in schematischer Darstellung auf eine Hinterachse mit Schräglenkern und einer Hinterradlenkeinrichtung,

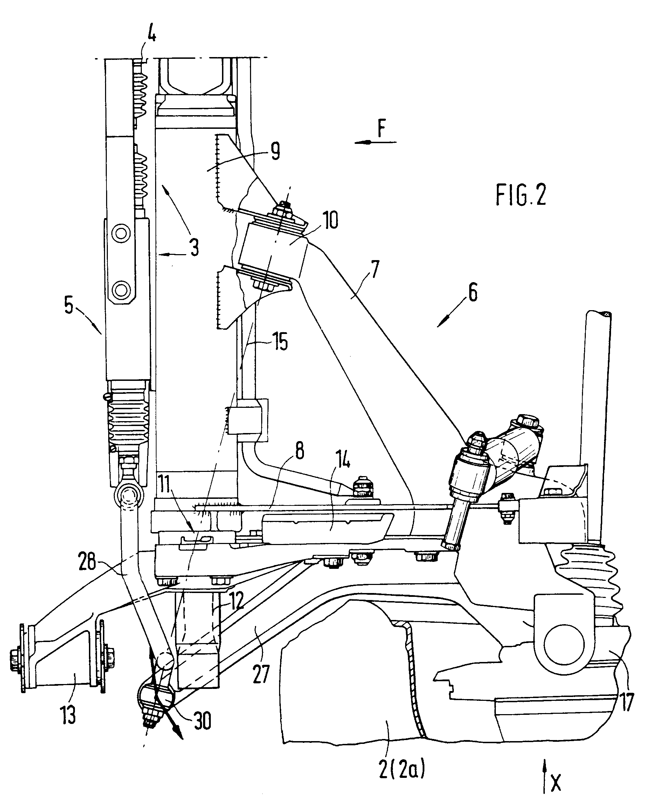

- Fig. 2: eine Draufsicht auf ein - in bezug auf die Fahrtrichtung - rechten Radführungslenker in konstruktiver Darstellung mit Verstelleinrichtung,

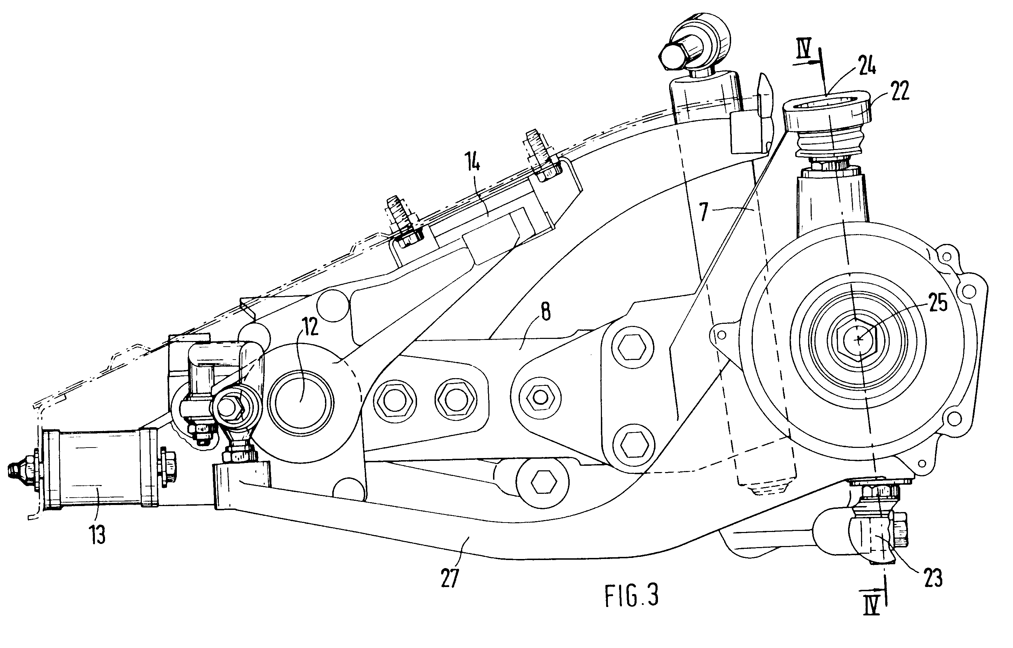

- Fig. 3: eine Seitenansicht des Schräglenkers gemäß Fig. 2 in Pfeilrichtung X gesehen, in einem größeren Maßstab,

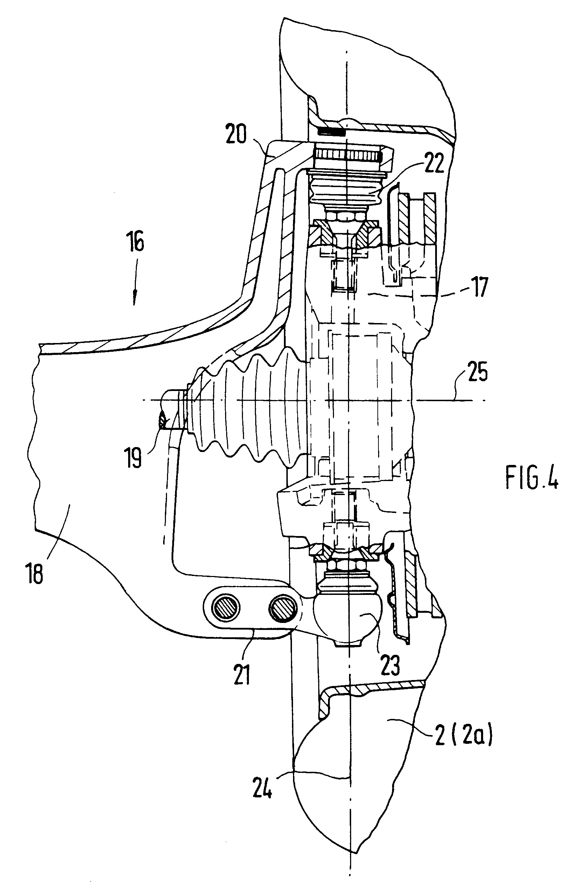

- Fig. 4: einen Schnitt nach der Linie IV-IV der Fig. 3, in vergrößerter Darstellung,
- Fig. 5: eine Rückstelleinrichtung mit zwei Federn und einem Steuerzylinder teilweise im Schnitt,

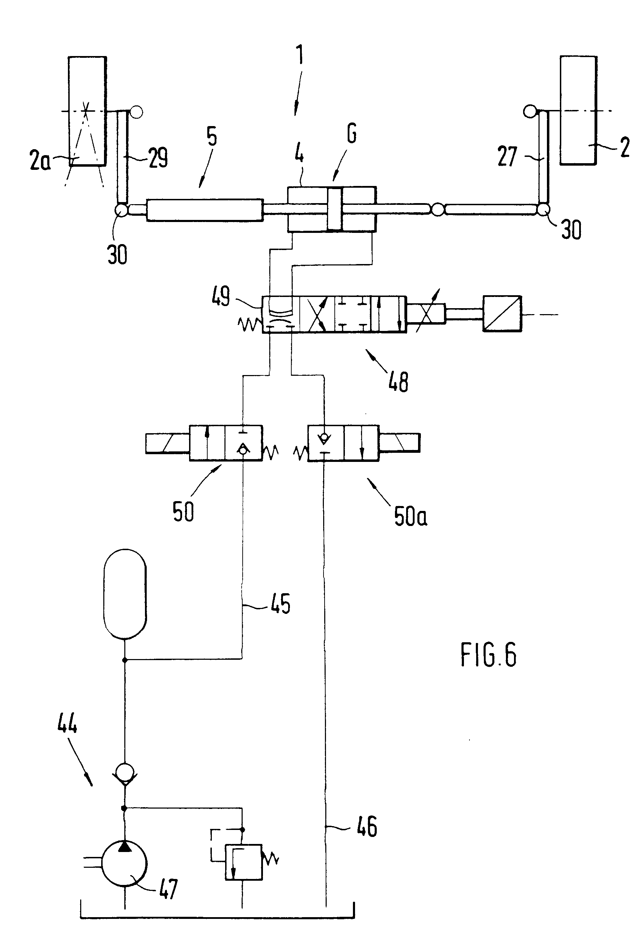

- Fig. 6: eine schematische Darstellung der hydraulischen Ansteuerung der Steuerzylinders mit Drosselventil und Abschaltventilen und
- Fig. 7: eine weitere Ausführung einer Rückstelleinrichtung mit einer Feder.

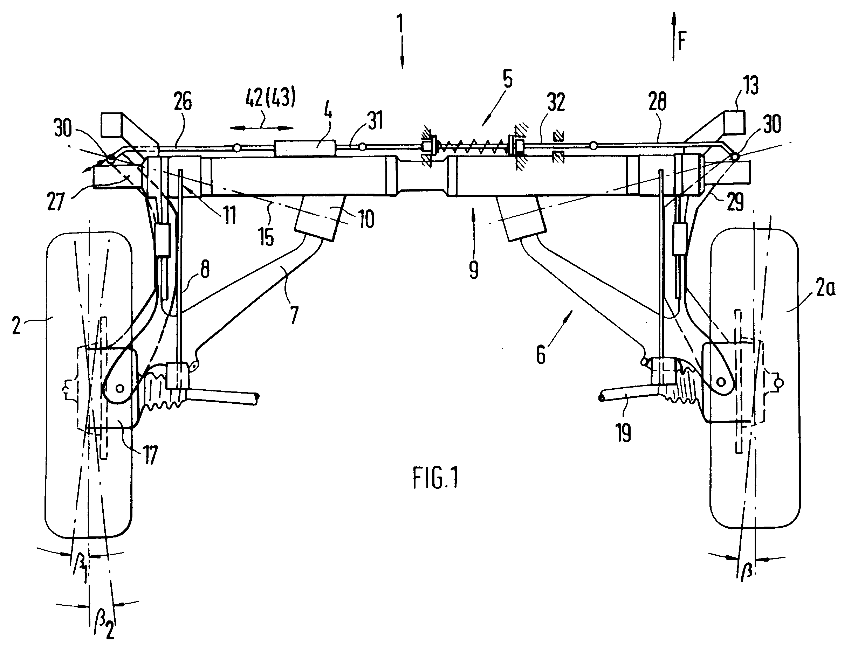

Eine Lenkeinrichtung 1 für die Hinterräder 2, 2a eines Kraftfahrzeugs umfaßt im wesentlichen einen Steuerzylinder 4 mit einer gekoppelten Rückstelleinrichtung 5 und einen hydraulischen Druckkreislauf. Die Radführung erfolgt über einen Radführungslenker 6, der insbesondere bei dem gezeigten Ausführungsbeispiel gemäß Fig. 1 aus einem Schräglenker besteht. Dieser weist einen ersten schrägverlaufenden Lenkerarm 7 und einen sich in Fahrzeuglängsrichtung erstreckenden zweiten Lenkerarm 8 auf. Eine aufbauseitige Lagerung des Lenkers 6 erfolgt an einem Fahrschemel bzw. an einem Querrohr 9, wobei der erste Lenkerarm 7 über ein Lager 10 und der zweite Lenkerarm 8 an einem Lagerort 11 des Rohres fest mit diesem verbunden ist. Das Querrohr 9 ist über Lager 13 und 14 am Fahrzeugaufbau abgestützt und mit einer Drehstabfeder 12 versehen

Das Lager 10 und der Lagerort 11 des Lenkers 6 bilden eine Schwenkachse 15 des Schräglenkers 6, die etwa in einer horizontalen Ebene vom Lager 10 zum Lagerort 11 - in bezug auf die Fahrtrichtung F - schräg nach außen verläuft. Die beiden Lenkerarme 7 und 8 sind in einem Bereich 16 vor einem Radträger 17 über ein angeformtes Führungsteil 18 verbunden, durch das eine Rad-Antriebswelle 19 geführt ist. Vom Führungsteil 18 zweigen vom Radträger 17 - in bezug auf eine Radachse 25 - von oben und unten übergreifende Lagerarme 20 und 21 ab, die über Stützgelenke 22 und 23 mit dem Radträger 17 gelenkig verbunden sind. Eine durch diese Gelenke 22 und 23 gelegte Verbindungslinie bildet eine Drehachse 24 für die Hinterräder 2, 2a bei einer Lenkwinkeleinstellung. Insbesondere sind die Lenkhebel 27 und 29 einstückig mit dem Radträger 17 ausgeführt. Zur Lenkwinkeleinstellung der Hinterräder 2 und 2a ist der Steuerzylinder 4 über eine erste Spurstange 26 mit einem Lenkhebel 27 des - in bezug auf die Fahrtrichtung F - linksliegenden einen Hinterrades 2 und unter Zwischenschaltung der Rückstelleinrichtung 5 über eine zweite Spurstange 28 mit einem Lenkhebel 29 des rechtsliegenden Hinterrades 2a verbunden. Eine Verbindung der Spurstange 26 mit dem Lenkhebel 27 bzw. der Spurstange 28 mit dem Lenkhebel 29 erfolgt jeweils über ein Umlenkgelenk 30. Dieses ist in der Schwenkachse 15 des Führungslenkers 6 angeordnet, wodurch bei Federbewegungen des Lenkers 6 eine unbeabsichtigte Vorspurbeeinflussung der Hinterräder 2, 2a vermieden wird.

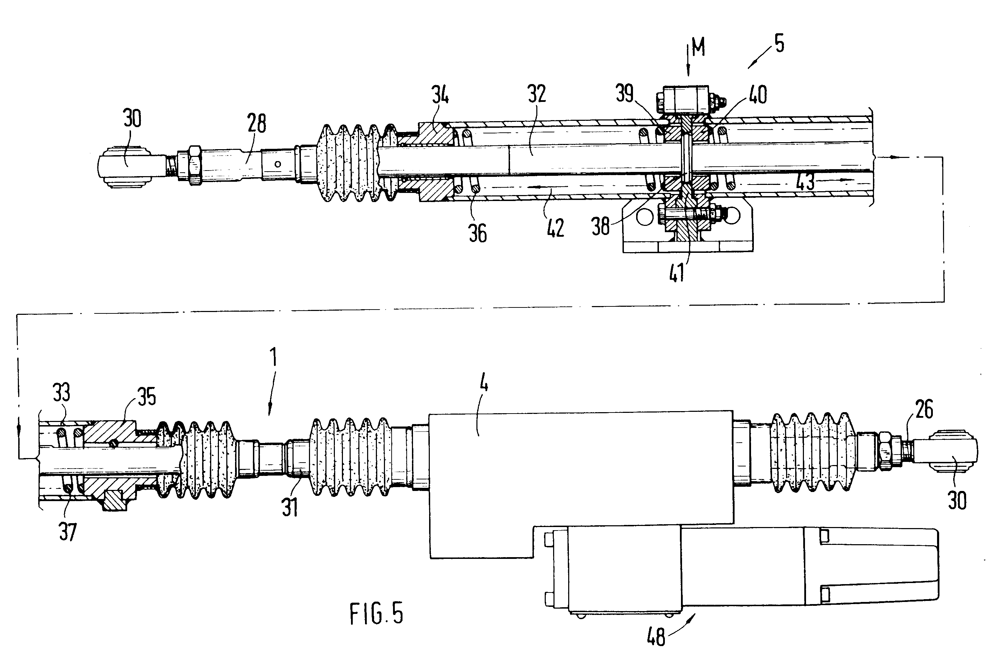

Die Rückstelleinrichtung 5 ist vorzugsweise achsgleich mit dem Steuerzylinder 4 am Querrohr 9 befestigt und umfaßt eine mit der Kolbenstange 31 des Zylinders 4 verbundene Stellstange 32. Diese ist in einem zylindrischen Rohr 33 über endseitig angeordnete Lagerbuchsen 34 und 35 axialbewegbar geführt. Zur Erzielung einer Rückstellbewegung des Steuerzylinders 4 in einer Mittelstellung M, wie Fig. 5 näher zeigt, die einer Geradeausstellung der Räder 2, 2a mit dem Lenkwinkel β = 0 entspricht, ist die Stellstange 32 über Druckfedern 36 und 37 entsprechend beaufschlagt. Hierzu ist die Stellstange 32 mit einer stangenfesten Anschlagscheibe 38 versehen, an der zu beiden Seiten auf der Stange 32 verschiebbare Druckscheiben 39 und 40 unter Spannung von Federn 36 und 37 anliegend sind. In der gezeigten Mittelstellung M stützen sich die Druckscheiben 39, 40 mit zwischenliegender Anschlagscheibe 38 an einem Segmentring 41 ab, der mit dem Zylinderrohr 33 fest verbunden ist. Bei einer Bewegung der Stellstange 32 z.B. in Pfeilrichtung 42 zur Einstellung eines Hinterradlenkwinkels hebt sich die Druckscheibe 39 vom Segmentring 41 unter der Spannung der Feder 36 vom Segmentring 41 ab. Entsprechend hebt sich die Druckscheibe 40 bei einer Bewegung der Stellstange 32 in Pfeilrichtung 43 von der Segmentscheibe 41 ab.

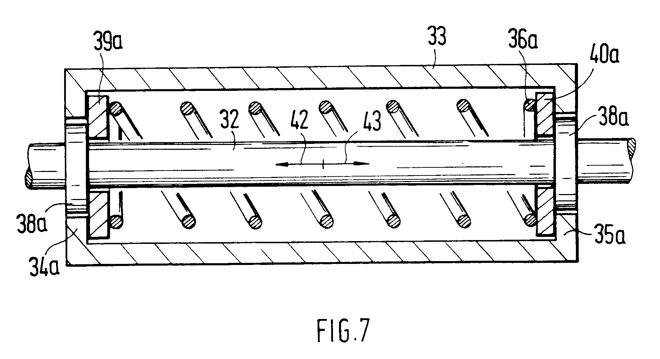

Nach einer weiteren Ausführung einer Rückstelleinrichtung, gemäß Fig. 7, ist diese mit einer einzigen Druckfeder 36a ausgerüstet. Im Zylinderrohr 33 ist die Stellstange 32 über verschiebbare Scheiben 39a, 40a geführt, die sich an Endanschlägen 34a, 35a des Rohres 33 unter Spannung der zwischengeschalteten Druckfeder 36a abstützen. In der Ebene der Endanschläge 34a und 35a sind stangenfeste Anschlagscheiben 38a vorgesehen, die in der gezeigten Mittelstellung gegen die Druckscheiben 39a, 40a anliegend sind. Bei einer Lenkwinkeleinstellung verschiebt sich die Stellstange in die Pfeilrichtungen 42, 43 unter Mitnahme der jeweiligen Druckscheibe 39a oder 40a gegen die Spannung der Feder 36a, welche eine Rückstellung des Steuerzylinder 4 bewirkt.

Dem Steuerzylinder 4 wird mittels einer Druckversorgungseinheit 44 über eine Zuleitung 45 Druckmedium zugeführt und über eine Rücklaufleitung 46 wird das Medium einem Ölsumpf zugeleitet. Zwischen einer Pumpe 47 und dem Steuerzylinder 4 sind in der Zuleitung 45 des Hydraulikkreislaufes ein ansteuerbares Mehrwege- Regelventil 48 mit einer Drossel 49 vorgeschaltet, die wiederum mit Abschaltventilen 50, 50a zusammenarbeitet, die in der Rücklauf- und Zulaufleitung 45, 46 angeordnet sind.

Zur Verstellung des Radlenkwinkels β₁ und β₂ (Fig. 1) wird in Abhängigkeit von Betriebs- bzw. Fahrparametern des Fahrzeugs der Steuerzylinder 4 entsprechend angesteuert, welcher eine Axialbewegung in die Pfeilrichtungen 42 oder 43 durchführt. Hierbei verschiebt sich die Stellstange 32 der Rückstelleinrichtung 5 entsprechend, wobei eine der Druckscheiben 39, 40 ihre abgestützte Lage am Segmentring 41 verläßt. Die Spurstange 26 oder 28 bewegt den Lenkhebel 27 oder 29 und somit den Radträger 17 zwischen den beiden Gelenken 22, 23 des Lenkers 6 um die Drehachse 24.

Bei einem Ausfall oder Defekt im hydraulischen und/oder elektrischen Steuerkreis der Lenkeinrichtung sollen sich die Hinterräder 2, 2a über die Rückstelleinrichtung 5 langsam und selbsttätig in eine Geradeausstellung zurückverstellen. Hierzu wird eine Mediumzuführung zum Steuerzylinder 4 über die Pumpe 47 einer Druckversorgungseinheit 44 durch ein Schließen der Abschaltventile 50 und 50a eingestellt und das Mehrwegeventil 48 nimmt eine Drosselstellung 49 ein. Der Steuerzylinder 4 wird über die Rückstelleinrichtung 5 in seine Stellung M verschoben, wobei das überschüssige Medium über die Drossel 49 von einer Kammer in die andere des Steuerzylinders strömt. Hierdurch ist es möglich die Hinterräder 2, 2a relativ langsam wieder in eine Geradeausstellung zu verschwenken, wobei die Druckfedern 36 oder 37 die Stellstange unter Mitnahme der Kolbenstange 31 in die Stellung M (Fig. 5) verschieben. In dieser Stellung sind die Räder 2, 2a durch die Rückstelleinrichtung spielfrei gehalten, da die Haltekraft der Federn größer ausgelegt ist, als die möglichen Störkräfte auf die Räder.

## Patentansprüche

1. Hinterachse eines Kraftfahrzeugs mit Hinterradlenkeinrichtung, wobei über eine erste vom Lenkrad betätigbare Lenkeinrichtung die Vorderräder und mittels einer zweiten Lenkeinrichtung (1) die Hinterräder (2,2a) verstellbar sind, welche in Abhängigkeit von ermittelten Fahrzustandsgrößen, die einer elektronischen Steuereinheit, insbesondere einem Bordrechner zugeführt werden, mittels eines hydraulischen Stellzylinders (4) mit einer bewegungsabhängig gekoppelten Rückstelleinrichtung (5) ansteuerbar und in einem variablen Radeinschlagwinkelverhältnis zu den Vorderrädern einstellbar sind, wobei der Stellzylinder (4) mit den Hinterrädern (2, 2a) über Spurstangen (26, 22) und anschließenden Lenkhebeln (27,29) zur Einstellung von Rad-Lenkwinkeln verbunden ist, **gekennzeichnet durch** die Kombination folgender Merkmale:
a) Die Hinterräder sind über einen einteiligen Schräglenker (6) geführt, der zwei starr miteinander verbundene Lagerarme (20, 21) umfasst, die einen Radträger (17) in übereinanderliegenden Ebenen ober- und unterhalb einer Radachse (25) über Stützgelenke (22,23) um eine vertikale Rad-Drehachse (24) schwenkbar halten;
b) Ein mit dem Radträger (17) einteiliger Lenkhebel (27) ist über ein in der durch Lager (10,11) gebildeten Schwenkachse (15) des Schräglenkers (6) angeordnetes Umlenkgelenk (30) mit der Spurstange (26, 28) verbunden;
c) Die Spurstangen (26, 28) sind achsgleich mit dem Stellzylinder (4) und der Rückstelleinrichtung (5) an einem den Schräglenker (6) über die Lager (10, 11) abstützenden und aufbauseitig gehaltenen Querrohr (9) angeordnet.

2. Lenkeinrichtung nach Anspruch 1, **dadurch gekennzeichnet**, daß der Stellzylinder (4) mit einer Federrückstelleinrichtung (5) verbunden ist, die eine in einem Zylinderrohr (33) zwischen verschiebbaren Druckscheiben (39a und 40a) axial verschieblich geführte Stellstange (32) umfasst, die Endanschläge (24a und 35a) des Rohres (33) abstützen und die Stellstange (32) über stangenfeste außenliegende Anschlagscheiben (38a und 38b) in Lage hält.

3. Lenkeinrichtung nach den Ansprüchen 1 oder 2, **dadurch gekennzeichnet**, daß die Rückstelleinrichtung über den Stellzylinder (4) mit einem Drosselventil (49) und zwei Abschaltventilen (50, 50a) gekoppelt ist, welche in einem hydraulischen Druckkreislauf zwischen einer Druckversorgungseinheit (44) und dem Stellzylinder (4) angeordnet sind, wobei das Drosselventil (49) im Druckkreislauf dem Stellzylinder (4) vorgeschaltet ist und in Reihe mit den zwei Abschaltventilen (50, 50a) liegt und jeweils ein Abschaltventil (50) in der Zuleitung und ein weiteres Abschaltventil (50a) in der Rücklaufleitung (46) angeordnet ist.

4. Lenkeinrichtung nach einem oder mehreren der vorhergehenden Ansprüche, **dadurch gekennzeichnet**, daß die Ventile (49, 50, 50a) zur Erzielung einer selbsttätigen, relativ langsamen Radrückführung in eine Mittelstellung (M) derart ausgelegt sind, daß bei einem stromlosen Ventil (48) dieses automatisch durch Federkraft eine Drosselstellung (49) einnimmt und die Ventile (50, 50a) federkraftbetätigt in eine Abschaltstellung bewegbar sind.

## Claims

1. A rear axle of a motor vehicle with a rear-wheel steering device, wherein the front wheels are movable by way of a first steering device actuable by the steering wheel and the rear wheels (2, 2a) are movable by means of a second steering device (1), which rear wheels (2, 2a) - as a function of travelling-state variables detected and supplied to an electronic control unit, in particular an on-board computer - are actuable by means of an hydraulic operating cylinder (4) with a restoring device (5) coupled in a movement-dependent manner and settable in a variable ratio to the front wheels with respect to the wheel-lock angle, wherein the operating cylinder (4) is connected to the rear wheels (2, 2a) by way of track rods (26, 28) and adjoining steering levers (27, 29) for setting the wheel-steering angles, **characterized by** the combination of the following features:
a) the rear wheels are guided by way of a one-piece inclined support arm (6) comprising two bearing arms (20, 21) which are rigidly connected together and which hold a wheel support (17) in planes, one lying above and the other lying below a wheel axis (25) by way of support joints (22, 23) so as to be pivotable about a vertical axis of rotation (24) of the wheel;
b) a steering lever (27) integral with the wheel support (17) is connected to the track rod (26, 28) by way of a pivot joint (30) arranged in the pivot axis (15) - formed by bearings (10, 11) - of the inclined support arm (6);
c) the track rods (26, 28) are arranged coaxially with the operating cylinder (4) and the restoring device (5) on a transverse tube (9) supporting the inclined support arm (6) by way of the bearings (10, 11) and held on the body.

2. A steering device according to Claim 1, **characterized in that** the operating cylinder (4) is connected to a spring-restoring device (5) comprising an adjusting rod (32) which is guided axially displaceably in a cylindrical tube (33) between displaceable thrust washers (39a and 40a), which are supported on end stops (34a and 35a) of the tube (33) and hold the adjusting rod (32) in position by way of external stop discs (38a and 38b) rigid with the rod.

3. A steering device according to Claim 1 or 2, **characterized in that** the restoring device is coupled by way of the operating cylinder (4) to a throttle valve (49) and two shut-off valves (50, 50a) arranged in an hydraulic pressure circuit between a pressure-supply unit (44) and the operating cylinder (4), wherein the throttle valve (49) is arranged in the pressure circuit upstream of the operating cylinder (4) and in series with the two shut-off valves (50, 50a), and one shut-off valve (50) is arranged in the supply line and a further shut-off valve (50a) is arranged in the return line (46) respectively.

4. A steering device according to one or more of the preceding Claims, **characterized in that** the valves (49, 50, 50a) are arranged in such a way for achieving an automatic, relatively slow return of the wheels into a middle setting (**M**) that when a valve (48) has no flow it automatically occupies a throttling position (49) by spring force and the valves (50, 50a) are movable into a shut-off position by being actuated by spring force.

## Revendications

1. Essieu arrière d'un véhicule automobile avec direction sur les roues arrière, les roues avant étant déplaçables au moyen d'une première direction actionnée par le volant et les roues arrière (2, 2a) étant déplaçables au moyen d'une seconde direction (1), qui sont commandées, en fonction de grandeurs d'état de conduite déterminées, envoyées à une unité de commande électronique, en particulier un ordinateur de bord, au moyen d'un vérin (4) hydraulique avec un dispositif de rappel (5) accouplé en fonction du mouvement et qui sont ajustables par rapport aux roues avant, dans un rapport variable de l'angle de braquage, le vérin (4) étant relié aux roues arrière (2, 2a) par des barres d'accouplement (26, 22) et des leviers de commande (27, 29) leur faisant suite, en vue du réglage des angles de direction des roues, caractérisé par la combinaison des caractéristiques suivantes :
a) les roues arrière sont guidées par un bras oscillant incliné (6) d'une seule pièce, qui comprend deux bras d'appui (20, 21), reliés rigidement entre eux, lesquels maintiennent pivotant, autour d'un axe de rotation de roue (24) vertical, un support de roue (17), dans des plans superposés, au-dessus et au-dessous d'un essieu (25), au moyen d'articulations d'appui (22, 23) ;
b) un levier de commande (27), réalisé d'une seule pièce avec le support de roue (17), est relié à la barre d'accouplement (26, 28), par une articulation de renvoi (30), placée dans l'axe de pivotement (15), formé par des paliers (10, 11) du bras oscillant incliné (6) ;
c) les barres d'accouplement (26, 28) sont placées sur le même axe que le vérin (4) et le dispositif de rappel (5), sur un tube transversal (9), soutenant le bras oscillant incliné (6) par l'intermédiaire des paliers (10, 11), et fixé côté carrosserie.

2. Direction selon la revendication 1, caractérisée en ce que le vérin (4) est relié à un dispositif de rappel à ressort (5), qui comprend une tige de réglage (32), guidée de manière à coulisser axialement dans un tube cylindrique (33), entre des disques de pression (39a et 40a) coulissants, qui soutient les butées d'extrémité (24a et 35a) du tube (33) et qui maintient en position la tige de réglage (32), par des disques de butée (38a et 38b) extérieurs, solidaires de la tige.

3. Direction selon les revendications 1 ou 2, caractérisée en ce que le dispositif de rappel est accouplé, par le vérin (4), avec une soupape d'étranglement (49) et deux soupapes de coupure (50, 50a), qui sont montées dans un circuit de pression hydraulique, entre une unité d'alimentation de pression (44) et le vérin (4), la soupape d'étranglement (49) étant montée dans le circuit de pression en amont du vérin (4) et en série avec les deux soupapes de coupure (50, 50a), et une soupape de coupure (50) étant montée dans la conduite d'arrivée et une autre soupape de coupure (50a) dans la conduite de retour (46).

4. Direction selon une ou plusieurs des revendications précédentes, caractérisée en ce que les soupapes (49, 50, 50a) pour l'obtention d'un retour de roue automatique, relativement lent dans une position centrale (M), sont conçues de manière que lorsqu'une soupape (48) n'est pas alimentée en courant, celle-ci prend automatiquement, sous l'effet d'un ressort, une position d'étranglement (49) et les soupapes (50, 50a) sont déplaçables dans une position de coupure, actionnées par la force d'un ressort.
